# EUROPEAN PATENT APPLICATION

(11) **EP 4 678 666 A1**
(43) Date of publication of application: **14.01.2026**
(21) Application number: 23957264.7
(22) Date of filing: 02.11.2023
(51) Int. Cl.: C08F 214/22, C08F 220/06, H01M 4/62, H01M 10/0525

(54) **FLUORINE-CONTAINING POLYMER, PREPARATION METHOD THEREFOR, POSITIVE ELECTRODE SHEET, SECONDARY BATTERY AND ELECTRIC DEVICE**

(71) Applicant: Contemporary Amperex Technology Co., Limited, Ningde, Fujian 352100 (CN)
(72) Inventor: LI, Cheng, Ningde, Fujian 352100 (CN); WANG, Jingming, Ningde, Fujian 352100 (CN); LIU, Huihui, Ningde, Fujian 352100 (CN)
(74) Representative: Ziebig Hengelhaupt Intellectual Property Attorneys Patentanwaltskanzlei PartGmbB
(86) International application number: PCT/CN2023/129393
(87) International publication number: WO 2025/091394

(57) **Abstract**

This application provides a fluoropolymer, a preparation method therefor, a positive electrode plate, a secondary battery, and an electric device. The fluoropolymer comprises a structural unit derived from vinylidene fluoride and a structural unit derived from an unsaturated carboxylic acid monomer, wherein a weight average molecular weight of the fluoropolymer ranges from 5 million to 9 million, and optionally, from 5 million to 8 million.

## Description

### TECHNICAL FIELD

This application relates to the field of secondary battery technologies, and in particular, to a fluoropolymer, a preparation method for a fluoropolymer, a positive electrode plate, a secondary battery, and an electric device.

### BACKGROUND

In recent years, secondary batteries have been widely used in energy storage power supply systems such as water power stations, thermal power stations, wind power stations, and solar power stations, and in a plurality of fields such as electric tools, electric bicycles, electric motorcycles, electric vehicles, military equipment, and aerospace. With the popularization of applications of secondary batteries, higher requirements are also raised on electrochemical performance, cycle stability, and the like of the secondary batteries.

Binders are common materials in secondary batteries, and are in great demand in electrode plates, separators, packaging, and the like of the batteries. However, in the related art, use of a binder increases stiffness of an electrode plate film layer and deteriorates flexibility of an electrode plate, which is adverse to improving electrochemical performance of a battery. Therefore, the existing binders still need to be improved.

### SUMMARY

This application is made in view of the foregoing problems, and an objective thereof is to provide a fluoropolymer. The fluoropolymer can improve flexibility and an ultimate compacted density of an electrode plate, lower battery resistance, and further comprehensively improve an ultimate volumetric energy density and a cycle capacity retention rate of a battery.

To achieve the foregoing objective, this application provides a fluoropolymer. The fluoropolymer includes a structural unit derived from vinylidene fluoride and a structural unit derived from an unsaturated carboxylic acid monomer, where a weight average molecular weight of the fluoropolymer ranges from 5 million to 9 million, and optionally, from 5 million to 8 million.

Compared with a polymer binder in the related art, the fluoropolymer can, at a low addition amount, reduce stiffness of an electrode plate film layer, improve flexibility of an electrode plate, and lower battery resistance while maintaining bonding strength of the electrode plate, thereby comprehensively improving an ultimate volumetric energy density and a cycle capacity retention rate of a battery.

The fluoropolymer with a weight average molecular weight of 5 million to 8 million can lower battery resistance more effectively while taking both the ultimate volumetric energy density and the cycle capacity retention rate of the battery into account.

In any embodiment, based on a total molar number of the structural units in the fluoropolymer, a molar content of the structural unit derived from the unsaturated carboxylic acid monomer ranges from 0.5% to 2.5% and optionally, from 0.7% to 2.0%.

The fluoropolymer within the foregoing range can, at a low addition amount, improve flexibility and an ultimate compacted density of an electrode plate, lower battery resistance, and further comprehensively improve an ultimate volumetric energy density and a cycle capacity retention rate of a battery.

The structural unit derived from the unsaturated carboxylic acid monomer with a molar content ranging from 0.7% to 2.0% based on a total molar number of the structural units in the fluoropolymer can further lower battery resistance while taking the both the ultimate volumetric energy density and the cycle capacity retention rate of the battery into account more effectively.

In any embodiment, a polydispersity coefficient of the fluoropolymer ranges from 1.5 to 3.5, and optionally, from 1.9 to 2.3.

The fluoropolymer having a polydispersity coefficient of 1.8 to 3.5 can, at a low addition amount, improve flexibility and an ultimate compacted density of an electrode plate, and lower battery resistance, thereby comprehensively improving an ultimate volumetric energy density and a cycle capacity retention rate of a battery.

The fluoropolymer having a polydispersity coefficient of 1.9 to 2.3 can further improve bonding strength, lower battery resistance, and improve cycle stability of the battery.

In any embodiment, a crystallinity of the fluoropolymer ranges from 40% to 55%, and optionally, from 48% to 55%.

The fluoropolymer having a crystallinity within the foregoing range can, at a low addition amount, improve flexibility and an ultimate compacted density of an electrode plate, lower battery resistance, and further comprehensively improve an ultimate volumetric energy density and a cycle capacity retention rate of a battery.

In any embodiment, a Dv50 particle size of the fluoropolymer ranges from 20 um to 100 um.

The fluoropolymer having a Dv50 particle size within the foregoing range can, at a low addition amount, improve flexibility and an ultimate compacted density of an electrode plate, lower battery resistance, and further comprehensively improve an ultimate volumetric energy density and a cycle capacity retention rate of a battery.

In any embodiment, the unsaturated carboxylic acid monomer is shown in formula I:

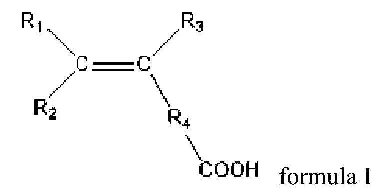

R₁, R₂, and R₃ each independently include at least one of hydrogen and C₁₋₃ alkyl, and R₄ includes at least one of an ester group, a carbonyl group, C₁₋₃ alkyl, and a single bond.

In any embodiment, R₄ includes an ester group.

That R4 includes an ester group can further improve flexibility and bonding strength of the electrode plate, and improve cycle stability and an ultimate volumetric energy density of a battery more effectively.

In any embodiment, the unsaturated carboxylic acid monomer includes at least one of acrylic acid, methacrylic acid, β-acryloxypropionic acid, and maleic acid.

Compared with another unsaturated carboxylic acid monomer, the unsaturated carboxylic acid monomer including β-acryloxypropionic acid can further improve flexibility and bonding strength of an electrode plate, and improve cycle stability and an ultimate volumetric energy density of a battery more effectively.

In any embodiment, viscosity of a colloidal solution of the fluoropolymer with a mass content of 2% prepared by dissolving the fluoropolymer in N-methylpyrrolidone ranges from 1000 mPa·s to 6000 mPa·s.

By controlling the viscosity of the colloidal solution of the fluoropolymer within an appropriate range, the fluoropolymer can, at a low addition amount, enable a slurry to be formed into a uniform electrode plate with specific bonding strength, thereby improving cycle stability of a battery.

In any embodiment, the fluoropolymer is at least one of poly(vinylidene fluoride-acrylic acid), poly(vinylidene fluoride-methacrylic acid), poly(vinylidene fluoride-β-acryloxypropionic acid), and poly(vinylidene fluoride-maleic acid).

According to a second aspect of this application, a preparation method for a fluoropolymer is provided, including the following steps:

providing a vinylidene fluoride monomer, an unsaturated carboxylic acid monomer, and a solvent, and performing a first-stage polymerization reaction to obtain a first product;
performing a second-stage polymerization reaction on the first product in a water-insoluble gas atmosphere; and
adding a chain transfer agent, and performing a third-stage polymerization reaction, to obtain a fluoropolymer with a weight average molecular weight of 5 million to 9 million.

The polymerization reaction is performed in a staged manner to prepare a polymer with a low polydispersity coefficient and a high molecular weight. In addition, the first product is formed in the first-stage polymerization reaction, a molecular chain segment with a target molecular weight is formed in the second-stage polymerization reaction, and the third-stage polymerization reaction is used to regulate a molecular weight of the polymer, reduce excessively high randomness of the weight average molecular weight of the polymer, and improve the uniformity of the polymer. In addition, the staged polymerization not only can improve a utilization rate of a rector in the polymer preparation process, but also can save time, and reduce a residence time of the polymer in the rector. The first-stage polymerization reaction, the second-stage polymerization reaction, and the third-stage polymerization reaction cooperate with each other, so that the production efficiency of the polymer can be further improved.

In any embodiment, the unsaturated carboxylic acid monomer is shown in formula I:

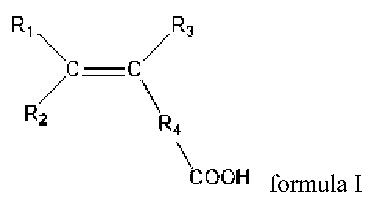

R₁, R₂, and R₃ each independently include at least one of hydrogen and C₁₋₃ alkyl, and R₄ includes at least one of an ester group, a carbonyl group, C₁₋₃ alkyl, and a single bond.

In any embodiment, a reaction temperature of the first-stage polymerization reaction ranges from 45°C to 60°C, a reaction time thereof ranges from 2 hours to 8 hours, and an initial condition is that a pressure of the vinylidene fluoride monomer ranges from 4 MPa to 6 MPa.

In any embodiment, a reaction temperature of the second-stage polymerization reaction ranges from 60°C to 80°C, a reaction time ranges from 2 h to 4 h, and a reaction pressure ranges from 6 MPa to 8 MPa.

In any embodiment, a reaction time of the third-stage polymerization reaction ranges from 1 hour to 2 hours.

By controlling reaction pressures, reaction times, and reaction temperatures of polymerization reactions at respective stages within appropriate ranges, uniformity of the weight average molecular weight of the polymerization product can be controlled while increasing the weight average molecular weight of the fluoropolymer, to ensure that the product has a low polydispersity coefficient and improve the uniformity of the product performance. The prepared polymer, at a low addition amount, enables an electrode plate to have excellent flexibility and an excellent bonding force, and can further improve a cycle capacity retention rate of a battery.

In any embodiment, the chain transfer agent includes one or more of cyclohexane, isopropanol, methanol, and acetone.

In any embodiment, the water-insoluble gas is selected from one or more of nitrogen, oxygen, hydrogen, and methane.

In any embodiment, a dosage of the chain transfer agent is 1.5% to 4% of a total mass of the vinylidene fluoride monomer and the unsaturated carboxylic acid monomer.

By controlling the dosage of the chain transfer agent within an appropriate range, a chain length of the polymer is controllable, thereby obtaining a polymer with an appropriate molecular weight range.

In any embodiment, the first-stage polymerization reaction includes the following steps: adding an aqueous solvent and a dispersant into a container to remove oxygen from a reaction system; adding an initiator and a pH adjuster into the container, to adjust a pH value to 6.5 to 7, and then adding the vinylidene fluoride monomer, to cause a pressure in the container to reach 4 MPa to 6 MPa; and after stirring for 30 to 60 minutes, raising the temperature to 45°C to 60°C, and adding the unsaturated carboxylic acid monomer to perform the first-stage polymerization reaction.

In any embodiment, a dosage of the solvent is 2 to 8 times the total mass of the vinylidene fluoride monomer and the unsaturated carboxylic acid monomer.

In any embodiment, the dispersant includes at least one of cellulose, cellulose ether, and polyvinyl alcohol; and optionally, the cellulose includes hydroxypropyl methylcellulose, and the cellulose ether includes one or more of methyl cellulose ether and carboxyethyl cellulose ether.

In any embodiment, a dosage of the dispersant is 0.1% to 0.3% of the total mass of the vinylidene fluoride monomer and the unsaturated carboxylic acid monomer.

In any embodiment, the initiator includes at least one of tert-amyl peroxypivalate, tert-amyl peroxypivalate, 2-ethyl peroxydicarbonate, diisopropyl peroxydicarbonate, tert-butyl peroxypivalate, and diisopropyl peroxydicarbonate.

In any embodiment, a dosage of the pH adjuster is 0.05% to 0.2% of the total mass of the vinylidene fluoride monomer and the unsaturated carboxylic acid monomer.

In any embodiment, in the first-stage polymerization reaction, the unsaturated carboxylic acid monomer is added a plurality of times.

The polymerization reaction of the unsaturated carboxylic acid monomer and vinylidene fluoride is exothermic. The heat causes the solvent inside the reactor to volatilize and the pressure to rise rapidly. By adding the unsaturated carboxylic acid monomer a plurality of times to maintain the pressure of the reaction stable, the fluoropolymer can be polymerized uniformly with a lower polydispersity coefficient.

According to a third aspect of this application, a positive electrode plate is provided, including a positive electrode film layer, including the fluoropolymer according to any embodiment or a fluoropolymer prepared by using the preparation method according to any embodiment.

In any embodiment, a mass fraction of the fluoropolymer is 0.3% to 1.1%, and optionally 0.4% to 0.8%, based on a total mass of the positive electrode film layer.

The fluoropolymer within the foregoing range can, while maintaining bonding strength of an electrode plate, improve flexibility and an ultimate compacted density of the electrode plate, lower battery resistance, and further comprehensively improve an ultimate volumetric energy density and a cycle capacity retention rate of a battery.

In any embodiment, a quantity of times that the positive electrode plate is bendable at a compacted density of 3.5 g/cm³ to 3.7 g/cm³ is not less than 2, and optionally, 2 to 4.

In any embodiment, an ultimate compacted density of the positive electrode plate is not less than 3.6 g/cm³, and optionally, 3.6 g/cm³ to 3.7 g/cm³.

According to a fourth aspect of this application, a secondary battery is provided, including the positive electrode plate according to the third aspect of this application.

According to a fifth aspect of this application, an electric device is provided, including the secondary battery according to the fourth aspect of this application.

### BRIEF DESCRIPTION OF THE DRAWINGS

FIG. 1 is a schematic diagram of a secondary battery according to an embodiment of this application;
FIG. 2 is an exploded view of the secondary battery shown in FIG. 1 according to an embodiment of this application;
FIG. 3 is a schematic diagram of a battery module according to an embodiment of this application;
FIG. 4 is a schematic diagram of a battery pack according to an embodiment of this application;
FIG. 5 is an exploded view of the battery pack shown in FIG. 4 according to an embodiment of this application; and
FIG. 6 is a schematic diagram of an electric device using a secondary battery as a power supply according to an embodiment of this application.

### DESCRIPTION OF REFERENCE SIGNS:

1. battery pack; 2. upper box body; 3. lower box body; 4. battery module; 5. secondary battery; 51. case; 52. electrode assembly; 53. cap assembly.

### DETAILED DESCRIPTION

Embodiments that specifically disclose a fluoropolymer, a method for manufacturing same, a positive electrode plate, a secondary battery, and an electric device of this application are described below in detail with reference to the accompanying drawings. However, there are cases in which unnecessary detailed descriptions are omitted. For example, there are cases in which detailed descriptions of well-known matters are omitted and repeated descriptions of actually the same structures are omitted. This is to avoid unnecessary redundancy in the subsequent descriptions and to facilitate understanding by a person skilled in the art. In addition, the accompanying drawings and the following description are provided for a person skilled in the art to fully understand this application and are not intended to limit the subject matter recorded in the claims.

The "ranges" disclosed in this application are defined in the form of lower and upper limits, with a given range being defined by the selection of a lower limit and an upper limit defining the boundaries of the particular range. A range defined in this manner may be inclusive or exclusive of end values, and may be arbitrarily combined, that is, any lower limit may be combined with any upper limit to form a range. For example, if ranges of 60 to 120 and 80 to 110 are provided for a specific parameter, it should be understood that ranges of 60 to 110 and 80 to 120 are also predictable. Additionally, if the minimum range values 1 and 2 and the maximum range values 3, 4 and 5 are listed, the following ranges are all contemplated: 1 to 3, 1 to 4, 1 to 5, 2 to 3, 2 to 4 and 2 to 5. In this application, unless otherwise stated, the numerical range of "a to b" represents an abbreviated representation of any combination of real numbers between a and b, where both a and b are real numbers. For example, the numerical range "0 to 5" means that all real numbers between 0 and 5 are listed herein, and "0 to 5" is merely an abbreviated representation of the combination of these numbers. In addition, when a parameter is expressed as an integer≥2, it is equivalent to disclosing that the parameter is, for example, an integer of 2, 3, 4, 5, 6, 7, 8, 9, 10, 11, 12, or the like.

If there is no special explanation, all embodiments and optional embodiments of this application can be combined to form new technical solutions.

Unless otherwise specified, all technical features and optional technical features of this application can be combined to form new technical solutions.

Unless otherwise specified, all the steps in this application can be performed in the order described or in a random order, and preferably in the order described. For example, the phrase "the method includes step (a) and step (b)" indicates that the method may include step (a) and step (b) performed sequentially, or the method may include step (b) and step (a) performed sequentially. For example, reference to "the method may further include step (c)" indicates that step (c) may be added to the method in any order, for example, the method may include steps (a), (b), and (c), or may include steps (a), (c), and (b), or may include steps (c), (a), and (b), and the like.

Unless otherwise specified, "include" and "contain" mentioned herein mean openended inclusion or closed-ended inclusion. For example, "include" and "contain" may mean that other components not listed may or may not further be included or contained.

Unless otherwise specified, a term "or" is inclusive in this application. For example, the phrase "A or B" means "A, B, or both A and B. More specifically, the condition "A or B" is satisfied by any one of the following conditions: A is true (or present) and B is false (or absent); A is false (or absent) and B is true (or present); or both A and B are true (or present).

A vinylidene fluoride polymer is currently one of the most widely used binder types in secondary batteries. However, addition of the polyvinylidene fluoride polymer to an electrode plate film layer usually worsens flexibility of an electrode plate and increases battery resistance, making it difficult to further improve a compacted density of the electrode plate, which limits further improvement of a volumetric energy density and cycle stability of a battery.

### [Fluoropolymer]

Based on this, this application provides a fluoropolymer. The fluoropolymer includes a structural unit derived from vinylidene fluoride and a structural unit derived from an unsaturated carboxylic acid monomer, where a weight average molecular weight of the fluoropolymer ranges from 5 million to 9 million, and optionally, from 5 million to 8 million.

In this specification, the term "polymer" includes a collection of chemically homogeneous macromolecules prepared through a polymerization reaction, but differing in terms of a degree of polymerization, a molar mass, and a chain length. In addition, the term also includes a derivative of such a collection of macromolecules formed through a polymerization reaction, that is, a compound that can be obtained through a reaction, such as addition or substitution, of a functional group in the foregoing macromolecules and that may be chemically homogeneous or chemically heterogeneous.

In this specification, the term "fluoropolymer" refers to a polymer in which at least one hydrogen atom is replaced by a fluorine atom.

In this specification, the term "weight average molecular weight" refers to a sum of products of weight fractions occupied by molecules with different molecular weights in a polymer and the molecular weights corresponding to the molecules.

In this specification, the term "unsaturated carboxylic acid monomer" refers to an unsaturated monomer containing a carboxyl functional group.

In this application, the weight average molecular weight of the fluoropolymer can be tested by selecting a known method in the art, for example, by using gel chromatography such as using a Waters 2695 Isocratic HPLC gel chromatograph (differential refractive index detector 2141). In some embodiments, a test method is selecting a matching chromatographic column (oily: Styragel HT 5 DMF 7.8*300 mm+Styragel HT 4) by using a sample of a polystyrene solution with a mass fraction of 3.0% as a reference. A colloidal solution of 3.0% fluoropolymer is prepared by using a purified N-methylpyrrolidone (NMP) solvent, and the prepared solution is allowed to stand for one day for later use. During the test, tetrahydrofuran is drawn into a syringe for rinsing, which is repeated a plurality of times. Then, 5 mL of the tested solution is drawn, air is expelled from the syringe, and a needle tip is wiped dry. Finally, the sample solution is slowly injected into the injection port. After the display is stable, the data is obtained, and the weight average molecular weight is read.

In some embodiments, the weight average molecular weight of the fluoropolymer is 5 million, 5.5 million, 6 million, 6.5 million, 7 million, 7.5 million, 8 million, 8.5 million, 9 million, or any value between any two thereof.

### In some embodiments, the fluoropolymer is used as a binder.

In this specification, the term "binder" refers to a chemical compound, a polymer, or a mixture that forms a colloidal solution or colloidal dispersion in a dispersion medium.

In some embodiments, the dispersion medium of the binder is an oily solvent, and examples of the oily solvent include, but are not limited to, dimethylacetamide, N,N-dimethylformamide, N-methylpyrrolidone, acetone, dimethyl carbonate, ethyl cellulose, and polycarbonate. That is, the binder is dissolved in an oily solvent.

In some embodiments, the binder is used for fixing an electrode active material and/or a conductive agent in place and adhering the electrode active material and/or the conductive agent to a conductive metal part to form an electrode.

In some embodiments, the binder is used as a positive electrode binder to bind a positive active material and/or a conductive agent to form an electrode.

In some embodiments, the binder is used as a negative electrode binder to bind a negative active material and/or a conductive agent to form an electrode.

Compared with a polymer binder in the related art, the fluoropolymer can, at a low addition amount, reduce stiffness of an electrode plate film layer, improve flexibility of an electrode plate, and lower battery resistance while maintaining bonding strength of the electrode plate, thereby comprehensively improving an ultimate volumetric energy density and a cycle capacity retention rate of a battery.

The fluoropolymer with a weight average molecular weight of 5 million to 8 million can lower battery resistance more effectively while taking both the ultimate volumetric energy density and the cycle capacity retention rate of the battery into account.

In some embodiments, based on a total molar number of the structural units in the fluoropolymer, a molar content of the structural unit derived from the unsaturated carboxylic acid monomer ranges from 0.5% to 2.5% and optionally, from 0.7% to 2.0%.

In some embodiments, the molar content of the structural unit derived from the unsaturated carboxylic acid monomer is optionally, 0.5%, 0.7%, 1%, 1.5%, 2%, 2.5%, or a numerical range between any two thereof.

The fluoropolymer within the foregoing range can, at a low addition amount, improve flexibility and an ultimate compacted density of an electrode plate, lower battery resistance, and further comprehensively improve an ultimate volumetric energy density and a cycle capacity retention rate of a battery.

The structural unit derived from the unsaturated carboxylic acid monomer with a molar content ranging from 0.7% to 2.0% based on a total molar number of the structural units in the fluoropolymer can further lower battery resistance while taking the both the ultimate volumetric energy density and the cycle capacity retention rate of the battery into account more effectively.

In some embodiments, a polydispersity coefficient of the fluoropolymer ranges from 1.5 to 3.5, and optionally, from 1.9 to 2.3.

In some embodiments, the polydispersity coefficient of the polymer is 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, or a numerical range between any two thereof.

In this specification, the term "polydispersity coefficient" refers to a ratio of a weight average molecular weight of a fluoropolymer to a number average molecular weight of the fluoropolymer.

In this specification, the term "number average molecular weight" refers to a sum of products of molar fractions occupied by molecules with different molecular weights in a fluoropolymer and the molecular weights corresponding to the molecules.

In this application, the polydispersity coefficient can be tested by selecting a known method in the art, for example, by using gel chromatography such as using a Waters 2695 Isocratic HPLC gel chromatograph (differential refractive index detector 2141). In some embodiments, a matching chromatographic column (oily: Styragel HT 5 DMF 7.8*300 mm+Styragel HT 4) is selected by using a sample of a polystyrene solution with a mass fraction of 3.0% as a reference. A colloidal solution of 3.0% fluoropolymer is prepared by using a purified N-methylpyrrolidone (NMP) solvent, and the prepared solution is allowed to stand for one day for later use. During the test, tetrahydrofuran is drawn into a syringe for rinsing, which is repeated a plurality of times. Then, 5 mL of the tested solution is drawn, air is expelled from the syringe, and a needle tip is wiped dry. Finally, the sample solution is slowly injected into the injection port. After the display is stable, the data is obtained. A weight average molecular weight a and a number average molecular weight b are read respectively. A polydispersity coefficient=a/b.

The fluoropolymer having a polydispersity coefficient of 1.8 to 3.5 can, at a low addition amount, improve flexibility and an ultimate compacted density of an electrode plate, and lower battery resistance, thereby comprehensively improving an ultimate volumetric energy density and a cycle capacity retention rate of a battery.

The fluoropolymer having a polydispersity coefficient of 1.9 to 2.3 can further improve bonding strength, lower battery resistance, and improve cycle stability of the battery.

In some embodiments, a crystallinity of the fluoropolymer ranges from 40% to 55%, and optionally, from 48% to 55%.

In some embodiments, the crystallinity of the fluoropolymer is 40%, 41%, 42%, 43%, 44%, 44%, 45%, 46%, 47%, 48%, 49%, 50%, 51%, 52%, 53%, 54%, 55%, or a numerical range between any two thereof.

In this specification, the term "crystallinity" refers to a proportion of crystalline regions in a polymer. There are some regions having stable and regular arrangement of molecules in a microstructure, and a region in which molecules are regularly and closely arranged is referred to as a crystalline region.

In this application, the crystallinity can be tested by selecting a method known in the art, for example, by using differential scanning calorimetry. In some embodiments, 0.5 g of fluoropolymer is placed in an aluminum dry crucible, shaken flat, and covered with a crucible lid, and is tested in a nitrogen atmosphere with a purge gas of 50 mL/min, a protective gas of 70 mL/min, a heating rate of 8°C/min, and a test temperature range of 30°C to 200°C, by using a differential scanning calorimeter (DSC) of model DSC 200 F30 from NETZSCH, Germany, and the thermal history is eliminated.

Through the test, a DSC/(Mw/mg) curve of the fluoropolymer changing with temperature is obtained and integrated. A peak area is the melting enthalpy ΔH (J/g) of the fluoropolymer. The crystallinity of the fluoropolymer=ΔH/(ΔHm100%)*100%, where ΔHm100% is the standard melting enthalpy (crystalline melting heat) of polyvinylidene fluoride, and ΔHm100%=104.7 J/g.

The fluoropolymer having a crystallinity within the foregoing range can, at a low addition amount, improve flexibility and an ultimate compacted density of an electrode plate, lower battery resistance, and further comprehensively improve an ultimate volumetric energy density and a cycle capacity retention rate of a battery.

In some embodiments, a Dv50 particle size of the fluoropolymer ranges from 20 µm to 100 µm.

In some embodiments, the Dv50 particle size of the fluoropolymer is 20 µm to 35 µm, 35 µm to 45 µm, 45 µm to 55 µm, 55 µm to 65 µm, 65 µm to 75 µm, 75 µm to 85 µm, 85 µm to 95 µm, 25 µm to 45 µm, 45 µm to 65 µm, 65 µm to 85 µm, 85 µm to 100 µm, or a numerical range between any two thereof.

In this specification, the term "Dv50 particle size" refers to a corresponding particle size when a cumulative particle size distribution number of particles reaches 50% in a cumulative volume distribution curve, and has a physical meaning that particles with a particle size smaller (or larger) than Dv50 account for 50%.

According to GB/T 19077-2016 Particle size analysis-laser diffraction method, 0.1 g to 0.13 g of fluoropolymer powder is weighed into a 50 mL beaker, 5 g of absolute ethanol is weighed and added into the beaker containing the fluoropolymer powder, then a stirring rod with a length of about 2.5 mm is placed, and the beaker is sealed with a plastic wrap. The sample is placed into an ultrasonic machine to be sonicated for 5 min, transferred to a magnetic stirrer, and stirred at 500 r/min for 20 min or more. 2 samples are taken from each batch of products for testing. Measurement is performed by using a laser particle size analyzer. For example, the Mastersizer 2000E laser particle size analyzer from Malvern Instruments Inc. is used for testing.

The fluoropolymer having a Dv50 particle size within the foregoing range can, at a low addition amount, improve flexibility and an ultimate compacted density of an electrode plate, lower battery resistance, and further comprehensively improve an ultimate volumetric energy density and a cycle capacity retention rate of a battery.

In some embodiments, the unsaturated carboxylic acid monomer is shown in formula I:

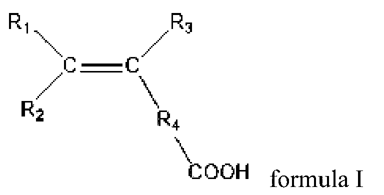

R₁, R₂, and R₃ each independently include at least one of hydrogen and C₁₋₃ alkyl, and R₄ includes at least one of an ester group, a carbonyl group, C₁₋₃ alkyl, and a single bond.

In this specification, the term "ester group" refers to a group containing -C(O)O-.

In this specification, the term "carbonyl" refers to a group containing -C(O)-.

In this specification, the term "alkyl" refers to a monovalent group having a general formula CₙH₂ₙ₊₁ derived from a saturated, unbranched or branched aliphatic hydrocarbon by removal of one hydrogen atom, where n is an integer. C₁₋₃ refers to an alkyl group in which n is an integer between 1 and 3.

In some embodiments, C₁₋₃ alkyl includes at least one of a methyl group, an ethyl group, a propyl group, and an isopropyl group.

In some embodiments, R₄ includes a single bond, that is, a carboxyl functional group is directly connected to a carbon atom connected to a carbon-carbon double bond.

In some embodiments, R₄ includes an ester group.

That R₄ includes an ester group can further improve flexibility and bonding strength of the electrode plate, and improve cycle stability and an ultimate volumetric energy density of a battery more effectively.

In some embodiments, the unsaturated carboxylic acid monomer includes at least one of acrylic acid, methacrylic acid, β-acryloxypropionic acid, and maleic acid.

In some embodiments, the unsaturated carboxylic acid monomer includes β-acryloxypropionic acid.

Compared with another unsaturated carboxylic acid monomer, the unsaturated carboxylic acid monomer including β-acryloxypropionic acid can further improve flexibility and bonding strength of an electrode plate, and improve cycle stability and an ultimate volumetric energy density of a battery more effectively.

In some embodiments, viscosity of a colloidal solution of the fluoropolymer with a mass content of 2% prepared by dissolving the fluoropolymer in N-methylpyrrolidone ranges from 1000 mPa·s to 6000 mPa·s.

In some embodiments, the viscosity of the colloidal solution of the fluoropolymer with a mass content of 2% prepared by dissolving the fluoropolymer in N-methylpyrrolidone is 1000 mPa·s, 1200 mPa·s, 1600 mPa·s, 2000 mPa·s, 2100 mPa·s, 2500 mPa·s, 2650 mPa·s, 2700 mPa·s, 2800 mPa·s, 3000 mPa·s, 3500 mPa·s, 4000 mPa·s, 4500 mPa·s, 5000 mPa·s, 6000 mPa·s, or a numerical range between any two thereof.

In this application, the viscosity of the fluoropolymer solution may be tested by using a method known in the art, for example, a rotational viscometer test method. For example, 14 g of fluoropolymer and 686 g of N-methylpyrrolidone (NMP) are respectively weighed by using a 500 mL beaker, to prepare a colloidal solution with a mass fraction of 2%, the colloidal solution is stirred and dispersed by using a Lichen high-speed grinder at a rotational speed of 800 r/min, and after being stirred for 120 min, the colloidal solution is ultrasonically vibrated for 30 min to remove bubbles. The NDJ-5S rotational viscometer from Lichen Technology is used, a No. 3 rotor is selected and inserted into the colloidal solution, and the colloidal solution is over a scale line. The viscosity is tested at 12 r/min, and viscosity data is read after 6 minutes.

By controlling the viscosity of the colloidal solution of the fluoropolymer within an appropriate range, the fluoropolymer can, at a low addition amount, enable a slurry to be formed into a uniform electrode plate with specific bonding strength, thereby improving cycle stability of a battery.

In some embodiments, the fluoropolymer is at least one of poly(vinylidene fluoride-acrylic acid), poly(vinylidene fluoride-methacrylic acid), poly(vinylidene fluoride-β-acryloxypropionic acid), and poly(vinylidene fluoride-maleic acid).

In an embodiment of this application, a preparation method for a fluoropolymer is provided, including the following steps: providing a vinylidene fluoride monomer, an unsaturated carboxylic acid monomer, and a solvent, and performing a first-stage polymerization reaction to obtain a first product; performing a second-stage polymerization reaction on the first product in a water-insoluble gas atmosphere; and adding a chain transfer agent, and performing a third-stage polymerization reaction, to obtain a fluoropolymer with a weight average molecular weight of 5 million to 9 million.

The polymerization reaction is performed in a staged manner to prepare a polymer with a low polydispersity coefficient and a high molecular weight. In addition, the first product is formed in the first-stage polymerization reaction, a molecular chain segment with a target molecular weight is formed in the second-stage polymerization reaction, and the third-stage polymerization reaction is used to regulate a molecular weight of the polymer, reduce excessively high randomness of the weight average molecular weight of the polymer, and improve the uniformity of the polymer. In addition, the staged polymerization not only can improve a utilization rate of a rector in the polymer preparation process, but also can save time, and reduce a residence time of the polymer in the rector. The first-stage polymerization reaction, the second-stage polymerization reaction, and the third-stage polymerization reaction cooperate with each other, so that the production efficiency of the polymer can be further improved.

It may be understood that the first product may be a reaction solution formed by a vinylidene fluoride monomer and a solvent, and may also be a product obtained after processing and purifying the foregoing reaction solution.

In some embodiments, the unsaturated carboxylic acid monomer is shown in formula I:

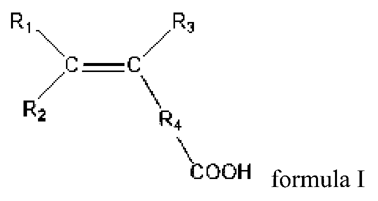

R₁, R₂, and R₃ each independently include at least one of hydrogen and C₁₋₃ alkyl, and R₄ includes at least one of an ester group, a carbonyl group, C₁₋₃ alkyl, and a single bond.

In some embodiments, a reaction temperature of the first-stage polymerization reaction ranges from 45°C to 60°C. In some embodiments, the reaction temperature of the first-stage polymerization reaction ranges from 45°C to 50°C, from 50°C to 55°C, from 55°C to 60°C, or from 45°C to 55°C.

In some embodiments, a reaction time of the first-stage polymerization reaction ranges from 2 h to 8 h. In some embodiments, the reaction time of the first-stage polymerization reaction is 2 h, 3 h, 4 h, 5 h, 6 h, 7 h, 8 h, or a range between any two thereof.

In some embodiments, a polymerization pressure of the first-stage polymerization reaction ranges from 4 MPa to 6 MPa.

In some embodiments, the polymerization pressure of the first-stage polymerization reaction ranges from 4 MPa to 5 MPa or from 5 MPa to 6 MPa.

In some embodiments, a reaction temperature of the second-stage polymerization reaction ranges from 60°C to 80°C. In some embodiments, the reaction temperature of the second-stage polymerization reaction ranges from 60°C to 70°C or from 70°C to 80°C.

In some embodiments, a reaction time of the second-stage polymerization reaction ranges from 2 h to 4 h. In some embodiments, the reaction time of the second-stage polymerization reaction ranges from 2 h to 3 h or 3 h to 4 h.

In some embodiments, a reaction pressure of the second-stage polymerization reaction ranges from 6 MPa to 8 MPa. In some embodiments, the reaction pressure of the second-stage polymerization reaction ranges from 6 MPa to 7 MPa or from 7 MPa to 8 MPa.

In some embodiments, a reaction time of the third-stage polymerization reaction ranges from 1 h to 2 h.

By controlling reaction pressures, reaction times, and reaction temperatures of polymerization reactions at respective stages within appropriate ranges, uniformity of the weight average molecular weight of the polymerization product can be controlled while increasing the weight average molecular weight of the polymer, to ensure that the product has a low polydispersity coefficient and improve the uniformity of the product performance. The prepared polymer, at a low addition amount, enables an electrode plate to have excellent flexibility and an excellent bonding force, and can further improve a cycle capacity retention rate of a battery.

In some embodiments, the chain transfer agent includes one or more of cyclohexane, isopropanol, methanol, and acetone.

A water-insoluble gas refers to a gas with a gas solubility of less than 0.1 L. Gas solubility refers to a volume of a gas when the gas at a pressure of 1.013×10⁵ Pa is dissolved in 1 L of water and reaches a saturated state at 20°C.

In some embodiments, the water-insoluble gas is selected from one or more of nitrogen, oxygen, hydrogen, and methane.

In some embodiments, a dosage of the chain transfer agent is 1.5% to 4% of a total mass of the vinylidene fluoride monomer and the monomer shown in formula I. The dosage of the chain transfer agent may also be, for example, 2%, 2.5%, 3%, 3.5%, or a numerical range between any two thereof.

By controlling the dosage of the chain transfer agent within an appropriate range, a chain length of the polymer is controllable, thereby obtaining a polymer with an appropriate molecular weight range.

In some embodiments, the first-stage polymerization reaction includes the following steps: adding an aqueous solvent and a dispersant into a container to remove oxygen from a reaction system; adding an initiator and a pH adjuster into the container, to adjust a pH value to 6.5 to 7, and then adding the vinylidene fluoride monomer, to cause a pressure in the container to reach 4 MPa to 6 MPa; and after stirring for 30 to 60 minutes, raising the temperature to 45°C to 60°C, and adding the unsaturated carboxylic acid monomer to perform the first-stage polymerization reaction.

In some embodiments, a dosage of the solvent is 2 to 8 times the total mass of the vinylidene fluoride monomer and unsaturated carboxylic acid. For example, the dosage of the solvent may also be 3, 4, 5, 6, or 7 times a total mass of the vinylidene fluoride monomer and the monomer shown in formula I.

In some embodiments, the solvent is water.

In some embodiments, the dispersant includes at least one of cellulose, cellulose ether, and polyvinyl alcohol; and optionally, the cellulose includes hydroxypropyl methylcellulose, and the cellulose ether includes one or more of methyl cellulose ether and carboxyethyl cellulose ether.

In any embodiment, a dosage of the dispersant is 0.1% to 0.3% of the total mass of the vinylidene fluoride monomer and the unsaturated carboxylic acid monomer.

In some embodiments, the initiator includes at least one of tert-amyl peroxypivalate, tert-amyl peroxypivalate, 2-ethyl peroxydicarbonate, diisopropyl peroxydicarbonate, tert-butyl peroxypivalate, and diisopropyl peroxydicarbonate.

In some embodiments, a dosage of the pH adjuster is 0.05% to 0.2% of the total mass of the vinylidene fluoride monomer and the unsaturated carboxylic acid monomer.

In some embodiments, in the first-stage polymerization reaction, the unsaturated carboxylic acid monomer is added a plurality of times.

The polymerization reaction of the unsaturated carboxylic acid monomer and vinylidene fluoride is exothermic. The heat causes the solvent inside the reactor to volatilize and the pressure to rise rapidly. By adding the unsaturated carboxylic acid monomer a plurality of times to maintain the pressure of the reaction stable, the fluoropolymer can be polymerized uniformly with a lower polydispersity coefficient.

### [Positive electrode plate]

A positive electrode plate includes a positive electrode film layer, including the fluoropolymer according to any embodiment or a fluoropolymer prepared by using the preparation method according to any embodiment.

In some embodiments, a mass fraction of the fluoropolymer ranges from 0.3% to 1.1%, and optionally, from 0.4% to 0.8% based on a total mass of a positive electrode slurry.

In some embodiments, the mass fraction of the fluoropolymer is 0.3%, 0.35%, 0.4%, 0.45%, 0.5%, 0.55%, 0.6%, 0.65%, 0.7%, 0.75%, 0.8%, 0.85%, 0.9%, 0.95%, 1%, 1.05%, 1.1%, or a numerical range between any two thereof.

The fluoropolymer within the foregoing range can, while maintaining bonding strength of an electrode plate, improve flexibility and an ultimate compacted density of the electrode plate, lower battery resistance, and further comprehensively improve an ultimate volumetric energy density and a cycle capacity retention rate of a battery.

In some embodiments, an average quantity of times that the positive electrode plate is bendable at a compacted density of 3.5 g/cm³ to 3.7 g/cm³ is not less than 2, and optionally, 2 to 4.

In some embodiments, the average quantity of times that the positive electrode plate is bendable at a compacted density of 3.5 g/cm³ to 3.7 g/cm³ is optionally 2, 3, 4, or a numerical range between any two thereof.

The average quantity of times that the positive electrode plate is bendable may be obtained through testing by using any known method. The compacted density is calculated by dividing a mass of a single-sided positive electrode film layer by a volume of the positive electrode film layer. The positive electrode plate with a compacted density of 3.6 g/cm³ is cut into test samples with a size of 20×100 mm². After being folded in half forward, the positive electrode plate is flattened with a roller of 2 kg and is unfolded and checked against light to determine whether a gap is light-permeable. If the gap is not light-permeable, the positive electrode plate is folded in half backward, is flattened with the roller of 2 kg, and is checked against light again, which is repeated until the gap is light-permeable, and a quantity of times of folding in half is recorded. The test is repeated ten times, and an average value is taken as the average quantity of times that the positive electrode plate is bendable, to represent flexibility of the positive electrode plate.

In some embodiments, an ultimate compacted density of the positive electrode plate is not less than 3.6 g/cm³, and optionally, 3.6 g/cm³ to 3.7 g/cm³.

In some embodiments, the ultimate compacted density of the positive electrode plate is 3.6 g/cm³, 3.65 g/cm³, 3.7 g/cm³, or a numerical range between any two thereof.

The ultimate compacted density refers to a corresponding maximum compacted density when an elongation of the electrode plate is not less than 7‰ and a quantity of times of flexible folding of the electrode plate is not less than 2. Increasing the ultimate compacted density of the electrode plate helps to increase the volumetric energy density of the battery.

In some embodiments, the positive electrode plate includes a positive electrode current collector and a positive electrode film layer arranged on at least one surface of the positive electrode current collector.

The positive electrode plate has good flexibility.

For example, the positive electrode current collector has two opposite surfaces in its own thickness direction, and the positive electrode film layer is arranged on either or both of the two opposite surfaces of the positive electrode current collector.

In some embodiments, the positive electrode current collector may be a metal foil or a composite current collector. For example, as a metal foil, an aluminum foil can be used. The composite current collector may include a polymer material substrate layer and a metal layer formed on at least one surface of the polymer material substrate layer. The composite current collector may be formed by forming a metal material (aluminum, an aluminum alloy, nickel, a nickel alloy, titanium, a titanium alloy, silver, a silver alloy, or the like) on a polymer material substrate (for example, a substrate of polypropylene (PP), polyethylene terephthalate (PET), polybutylene terephthalate (PBT), polystyrene (PS), or polyethylene (PE)).

In some embodiments, the positive electrode active material may be a positive electrode active material known in the art for batteries. For example, the positive active material may include at least one of the following materials: lithium-containing phosphate with an olivine structure, lithium transition metal oxide, and their respective modified compounds. However, this application is not limited to these materials, and other conventional materials that can be used as positive electrode active materials for batteries can also be used. It is possible to use only one of these positive active materials alone, or to use more than two in combination. An example of the lithium transition metal oxide may include, but is not limited to, a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃ for short), LiNi_{0.5}Co_{0.2}Mn_{0.3}O₂ (also referred to as NCM₅₂₃ for short), LiNi_{0.5}Co_{0.25}Mn_{0.25}O₂ (also referred to as NCM₂₁₁ for short), LiNi_{0.6}Co_{0.2}Mn_{0.2}O₂ (also referred to as NCM₆₂₂ for short), LiNi_{0.8}Co_{0.1}Mn_{0.1}O₂ (also referred to as NCM₈₁₁ for short), a lithium nickel cobalt aluminum oxide (such as LiNi_{0.85}Co_{0.15}Al_{0.05}O₂), and at least one of their modified compounds. An example of the lithium-containing phosphate with an olivine structure may include, but is not limited to, at least one of lithium iron phosphate (for example, LiFePO₄ (also referred to as LFP for short)), a composite material of lithium iron phosphate and carbon, lithium manganese phosphate (for example, LiMnPO₄), a composite material of lithium manganese phosphate and carbon, lithium iron manganese phosphate, and a composite material of lithium manganese iron phosphate and carbon.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofibers.

In some embodiments, the positive electrode plate can be prepared in the following manner: dispersing the foregoing components for preparing the positive electrode plate, for example, the positive electrode active material, the conductive agent, the binder, and any other components, in a solvent (for example, N-methylpyrrolidone) to form a positive electrode slurry; and coating a positive electrode current collector with the positive electrode slurry, followed by drying, cold pressing, and other procedures, to obtain the positive electrode plate.

### [Negative electrode plate]

The negative electrode plate includes a negative electrode current collector and a negative electrode film layer arranged on at least one surface of the negative electrode current collector. The negative electrode film layer includes a negative electrode active material.

For example, the negative electrode current collector has two opposite surfaces in a thickness direction thereof, and the negative electrode film layer is arranged on any one or both of the two opposite surfaces of the negative electrode current collector.

In some embodiments, the negative electrode current collector may be a metal foil or a composite current collector. For example, as a metal foil, a copper foil can be used. The composite current collector may include a polymer material substrate layer and a metal layer formed on at least one surface of the polymer material substrate layer. The composite current collector may be formed by forming a metal material (copper, a copper alloy, nickel, a nickel alloy, titanium, a titanium alloy, silver, a silver alloy, or the like) on a polymer material substrate (for example, a substrate of polypropylene (PP), polyethylene terephthalate (PET), polybutylene terephthalate (PBT), polystyrene (PS), or polyethylene (PE)).

In some embodiments, the negative electrode active material may be a negative electrode active material known in the art for batteries. As an example, the negative electrode active material may include at least one of the following materials: artificial graphite, natural graphite, soft carbon, hard carbon, a silicon-based material, a tin-based material and lithium titanate, etc. The silicon-based material may be selected from at least one of elemental silicon, silicon oxide, a silicon-carbon composite, a silicon-nitride composite, and a silicon alloy. The tin-based material may be selected from at least one of elemental tin, tin oxide, and a tin alloy. However, this application is not limited to these materials, and other conventional materials that can be used as the negative electrode active material of the battery may also be used. These negative electrode active materials may be used individually or in combination of more than two thereof.

In some embodiments, the negative film layer further optionally includes a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent can be selected from at least one of superconducting carbon, acetylene black, carbon black, Ketjen Black, carbon dots, carbon nanotubes, graphene, and carbon nanofibers.

In some embodiments, the negative electrode film layer further optionally includes other adjuvants such as a thickener (for example, sodium carboxymethyl cellulose (CMC-Na)).

In some embodiments, the negative electrode plate may be prepared in the following manner: dispersing the foregoing components, such as the negative electrode active material, the conductive agent, the binder, and any other components for preparing the negative electrode plate, in a solvent (for example, deionized water) to form a negative electrode slurry; and coating a negative electrode current collector with the negative electrode slurry, followed by drying, cold pressing, and other procedures, to obtain the negative electrode plate.

### [Electrolyte]

The electrolyte serves to conduct ions between the positive electrode plate and the negative electrode plate. The type of the electrolyte is not particularly limited in this application, and may be selected according to requirements. For example, the electrolyte may be in a liquid, gel, or fully-solid state.

In some embodiments, an electrolytic solution is used as the electrolyte. The electrolytic solution includes an electrolytic salt and a solvent.

In some embodiments, the electrolytic salt may be selected from at least one of lithium hexafluorophosphate, lithium tetrafluoroborate, lithium perchlorate, lithium hexafluoroborate, lithium bis(fluorosulfonyl)imide, lithium bis-trifluoromethanesulfon imide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane dimethyl sulfone, ethyl methyl sulfone, and diethyl sulfone.

In some embodiments, the electrolytic solution may further optionally include an additive. For example, the additive may include a negative electrode film-forming additive and a positive electrode film-forming additive. The additive may further include an additive capable of improving some performance of the battery, for example, an additive capable of improving overcharge performance of the battery, and an additive capable of improving high-temperature or low-temperature performance of the battery.

### [Separator]

In some embodiments, the secondary battery further includes a separator. The type of the separator is not particularly limited in this application, and any well-known separator of a porous structure having good chemical stability and mechanical stability may be used.

In some embodiments, the material of the separator may be selected from at least one of glass fiber, non-woven cloth, polyethylene, polypropylene, and polyvinylidene fluoride. The separator may be a single-layer film or a multi-layer composite film, which is not particularly limited herein. When the separator is the multi-layer composite thin film, the materials of the layers may be the same or different, which is not particularly limited.

In some embodiments, the positive electrode plate, the negative electrode plate, and the separator may be made into an electrode assembly by a winding process or a lamination process.

In some embodiments, the secondary battery may include an outer package. The outer package may be configured to package the electrode assembly and the electrolyte.

In some embodiments, the outer package of the secondary battery may be a hard case, for example, a hard plastic case, an aluminum case, or a steel case. The outer package of the secondary battery may also be a soft pack, such as a pouch type soft pack. The material of the soft pack can be a plastic, and examples of the plastic include polypropylene, polybutylene terephthalate and polybutylene succinate, and the like.

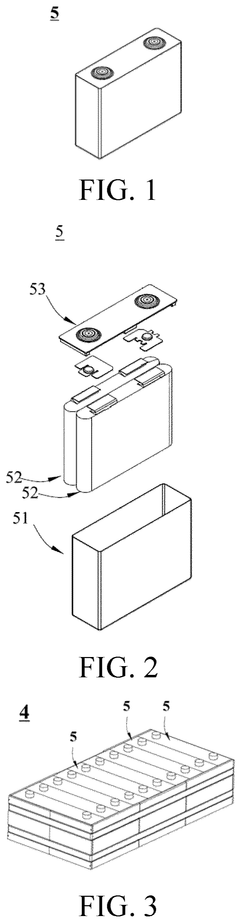

A shape of the secondary battery is not particularly limited in this application, and the secondary battery may be in a shape of a cylinder, in a shape of a square, or in any other shape. For example, FIG. 1 shows a secondary battery 5 having a square structure as an example.

In some embodiments, referring to FIG. 2, an outer package may include a case 51 and a cover plate 53. The case 51 may include a bottom plate and side plates connected to the bottom plate, and the bottom plate and the side plates enclose an accommodating cavity. The case 51 has an opening in communication with the accommodating cavity, and the cover plate 53 may cover the opening to close the accommodating cavity. The positive electrode plate, the negative electrode plate, and the separator may form an electrode assembly 52 through a winding process or a lamination process. The electrode assembly 52 is packaged in the accommodating cavity. The electrolytic solution infiltrates into the electrode assembly 52. The secondary battery 5 may include one or more electrode assemblies 52, and a person skilled in the art can make a selection according to actual requirements.

In some embodiments, the secondary battery may be assembled into a battery module, and a quantity of secondary batteries included in the battery module may be one or more, which may be specifically determined by a person skilled in the art based on the application and capacity of the battery module.

FIG. 3 shows a battery module 4 as an example. Referring to FIG. 3, in the battery module 4, a plurality of secondary batteries 5 may be arranged in sequence in the length direction of the battery module 4. Certainly, the plurality of secondary batteries 5 may also be arranged in any other manner. The plurality of secondary batteries 5 may further be secured by fasteners.

Optionally, the battery module 4 may further include a can having an accommodating space, and the plurality of secondary batteries 5 are accommodated in the accommodating space.

In some embodiments, the battery modules may be further assembled into a battery pack, and the battery pack may include one or more battery modules. A specific quantity may be chosen by a person skilled in the art based on the application and capacity of the battery pack.

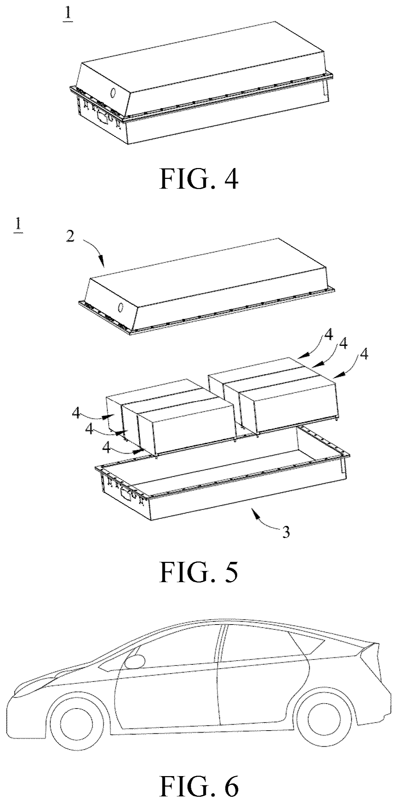

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3, to form an enclosed space for accommodating the battery modules 4. The plurality of battery modules 4 may be arranged in the battery box in any manner.

In addition, this application further provides an electric device. The electric device includes at least one of the secondary battery, the battery module, or the battery pack provided in this application. The secondary battery, the battery module, or the battery pack may be used as a power supply of the electric device, and may also be used as an energy storage unit of the electric device. The electric device may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

For the electric device, the secondary battery, the battery module, or the battery pack can be selected according to use needs.

FIG. 6 shows an electric device as an example. The electric device is a pure electric vehicle, a hybrid electric vehicle, a plug-in hybrid electric vehicle, or the like. To satisfy requirements of the electric device for high power and a high energy density of the secondary battery, a battery pack or a battery module may be used.

Another example of the device may be a mobile phone, a tablet computer, a notebook computer, or the like. The device is generally required to be thin and light, and may have a secondary battery used as a power supply.

### Examples

The examples of this application are described below. The examples described below are illustrative, are merely used to explain this application, and should not be construed as a limitation to this application. Where specific techniques or conditions are not specified in the examples, the techniques or conditions described in the literatures of the art or the product specifications are followed. Where no manufacturer is indicated for the reagents or instruments used, they are conventional products that can be commercially obtained.

### I. Preparation method

### Example 1

### 1) Preparation of fluoropolymer

First-stage polymerization reaction: 4 kg of deionized water and 2 g of methyl cellulose ether were added to No. 1 and No. 2 10 L autoclaves, and the autoclaves were evacuated and had O₂ replaced with N₂ three times. 5 g of tert-butyl peroxypivalate and 2 g of sodium bicarbonate were further added, and 1 kg of vinylidene fluoride monomer was filled to make the pressure reach 5 MPa. Mixing and stirring were performed for 30 min, the temperature was raised to 45°C, and meanwhile, an aqueous solution containing 22.5 g of β-acryloxypropionic acid was added a plurality of times. The reaction was performed for 3.0 h.

Second-stage polymerization reaction: The reaction liquid in the No. 1 and No. 2 reactors was transferred to a No. 3 reactor, nitrogen was filled to the pressure of 7 MPa, the temperature was raised to 70°C, and stirring and reaction were performed for 3 h.

Third-stage polymerization reaction: After 40 g of cyclohexane was added, the reaction was continued for 1 h and then, stopped. After being centrifuged, the reaction system was collected in solid phase, washed, and dried, to obtain a polyvinylidene fluoride copolymer.

### 2) Preparation of positive electrode plate

4935 g of NCM (a nickel-cobalt-manganese ternary material) and 30 g of fluoropolymer were stirred in a planetary stirring tank for 20 min at a revolution speed of 25 r/min, where a mass fraction of the fluoropolymer was 0.6% based on a total mass of a positive electrode film layer.

1.67 kg of N-methylpyrrolidone (NMP) solution was added into the stirring tank and was stirred for 50 min at a revolution speed of 25 r/min and a rotation speed of 800 to 1000 /min.

5 g of dispersant hydrogenated nitrile rubber (HNBR) and 30 g of single-walled carbon nanotubes (CNTs) were added into the stirring tank and were stirred for 50 min at a revolution speed of 25 r/min and a rotation speed of 1200 to 1500 r/min.

After the stirring was ended, viscosity of the slurry was tested, and the viscosity was controlled between 8000 and 15000 MPa·s.

If the viscosity was too high, the N-methylpyrrolidone (NMP) solution was added to reduce the viscosity into the foregoing range, and after the NMP solution was added, stirring was performed for 30 min at a revolution speed of 25 r/min and a rotation speed of 1250 r/min, to obtain a positive electrode slurry. After the NMP solution was added, stirring was performed for 30 min at a revolution speed of 25 r/min and a rotation speed of 1250 r/min, to obtain a positive electrode slurry. The prepared positive electrode slurry was scraped and coated onto a carbon-coated aluminum foil, and the aluminum foil was baked at 110°C for 15 minutes, cold pressed, and cut into discs with a diameter of 15 mm, to obtain a positive electrode plate.

### 3) Negative electrode plate

Active materials, namely, artificial graphite, a conductive agent acetylene black, a binder styrene-butadiene rubber (SBR), and a thickener sodium carboxymethyl cellulose (CMC-Na) were dissolved in a solvent deionized water at a weight ratio of 96.2:0.8:0.8:1.2, and were prepared into a negative electrode slurry after being stirred and mixed uniformly. The negative electrode slurry was uniformly applied to a negative electrode current collector copper foil at a time or a plurality of times, and after drying, cold-pressing, and cutting, a negative electrode plate was obtained.

### 4) Separator

A polypropylene film was used as the separator.

### 5) Preparation of electrolytic solution

In a glove box in an argon atmosphere (H₂O<0.1 ppm, and O₂<0.1 ppm), organic solvents ethylene carbonate (EC)/ethyl methyl carbonate (EMC) were mixed uniformly at a volume ratio of 3/7, and a lithium salt LiPF₆ was added and dissolved in the organic solvents and stirred uniformly to prepare 1 M of LiPF₆ EC/EMC solution, to obtain an electrolytic solution.

### 6) Preparation of battery

The positive electrode plate, the separator, and the negative electrode plate in Example 1 were stacked in sequence, so that the separator was positioned between the positive electrode plate and the negative electrode plate and functioned to separate. Then, a bare battery core was obtained by winding, a tab was welded to the bare battery core, the bare battery core was put into an aluminum case and baked at 80°C to remove water, then, the electrolytic solution was injected, and an uncharged battery was obtained after sealing. The uncharged battery then went through procedures, such as standing, hot and cold pressing, forming, reshaping, and capacity testing, sequentially to obtain a lithium-ion battery product of Example 1.

### Examples 2 to 5

Examples 2 to 5 were basically the same as Example 1, and differed from Example 1 in that: The reaction time in the first-stage polymerization reaction was adjusted to 5 h, 6 h, 7 h, and 8 h separately, and cyclohexane in the third-stage polymerization reaction was adjusted to 35 g, 30 g, 25 g, and 20 g separately. Specific parameters are shown in Table 1.

### Examples 6 to 9

Examples 6 to 9 were basically the same as Example 2, and differed from Example 2 in that: The molar content of β-acryloxypropionic acid was adjusted based on a total molar number of structural units in the fluoropolymer. Specific parameters are shown in Table 1.

### Examples 10 to 13

Examples 10 to 13 were basically the same as Example 2, and differed from Example 2 in that: The mass fraction of the vinylidene fluoride-β-acryloxypropionic acid copolymer was adjusted. The total mass of the electrode plate film layer was kept unchanged, and the mass content of the positive active material was correspondingly adjusted while the content of the fluorine-containing copolymer was adjusted. Specific parameters are shown in Table 1.

### Examples 14 to 16

Examples 14 to 16 were basically the same as Example 2, and differed from Example 2 in that: 1 mol% of β-acryloxypropionic acid was replaced with 1 mol% of acrylic acid, 1 mol% of methacrylic acid, and 1 mol% of maleic acid separately. Specific parameters are shown in Table 1.

### Example 17

Example 17 was basically the same as Example 2, and differed from Example 2 in that: In the first-stage polymerization reaction, the aqueous solution of β-acryloxypropionic acid was added at a time. Specific parameters are shown in Table 1.

### Comparative example 1

Comparative example 1 was basically the same as Example 1. The polyvinylidene fluoride-acrylic acid copolymer used for the positive electrode plate had a weight average molecular weight of 1.1 million and was purchased from Solvay in the United States. The addition amount of the positive electrode binder was 2.0%, and the mass content of the positive electrode active material was adjusted accordingly. Specific parameters are shown in Table 1.

### Comparative example 2

Comparative example 2 was basically the same as Example 2. The only polymerization monomer was vinylidene fluoride. Specific parameters are shown in Table 1.

### II. Battery performance test

### 1. Fluoropolymer property test

### 1) Weight average molecular weight test

A Waters 2695 Isocratic HPLC gel chromatograph (differential refractive index detector 2141) was used. A matching chromatographic column (oily: Styragel HT 5 DMF 7.8*300 mm+Styragel HT 4) was selected by using a sample of a polystyrene solution with a mass fraction of 3.0% as a reference. A colloidal solution of 3.0% fluoropolymer was prepared by using a purified N-methylpyrrolidone (NMP) solvent, and the prepared solution was allowed to stand for one day for later use. During the test, tetrahydrofuran was drawn into a syringe for rinsing, which was repeated a plurality of times. Then, 5 mL of the tested solution was drawn, air was expelled from the syringe, and a needle tip was wiped dry. Finally, the sample solution was slowly injected into the injection port. After the display was stable, the data was obtained, and the weight average molecular weight was read.

### 2) Polydispersity coefficient test

A Waters 2695 Isocratic HPLC gel chromatograph (differential refractive index detector 2141) was used. A matching chromatographic column (oily: Styragel HT 5 DMF 7.8*300 mm+Styragel HT 4) was selected by using a sample of a polystyrene solution with a mass fraction of 3.0% as a reference. A colloidal solution of 3.0% fluoropolymer was prepared by using a purified N-methylpyrrolidone (NMP) solvent, and the prepared solution was allowed to stand for one day for later use. During the test, tetrahydrofuran was drawn into a syringe for rinsing, which was repeated a plurality of times. Then, 5 mL of the tested solution was drawn, air was expelled from the syringe, and a needle tip was wiped dry. Finally, the sample solution was slowly injected into the injection port. After the display was stable, the data was obtained. A weight average molecular weight a and a number average molecular weight b were read respectively. A polydispersity coefficient=a/b.

### 3) Dv50 test

According to GB/T 19077-2016 Particle size analysis-laser diffraction method, 0.1 g to 0.13 g of fluoropolymer powder was weighed into a 50 mL beaker, 5 g of absolute ethanol was weighed and added into the beaker containing the fluoropolymer powder, then a stirring rod with a length of about 2.5 mm was placed, and the beaker was sealed with a plastic wrap. The sample was placed into an ultrasonic machine to be sonicated for 5 min, transferred to a magnetic stirrer, and stirred at 500 r/min for 20 min or more. 2 samples were taken from each batch of products for testing. It can be conveniently measured by a laser particle size analyzer, such as the Mastersizer 2000E laser particle size analyzer of Malvern Instruments Co., Ltd., UK.

### 4) Crystallinity test

0.5 g of fluoropolymer was placed in an aluminum dry crucible, shaken flat, and covered with a crucible lid, and was tested in a nitrogen atmosphere with a purge gas of 50 mL/min, a protective gas of 70 mL/min, a heating rate of 8°C/min, and a test temperature range of 30°C to 200°C, by using a differential scanning calorimeter (DSC) of model DSC 200 F30 from NETZSCH, Germany, and the thermal history was eliminated.

Through the test, a DSC/(Mw/mg) curve of the fluoropolymer changing with temperature was obtained and integrated. A peak area was the melting enthalpy ΔH (J/g) of the fluoropolymer. The crystallinity of the fluoropolymer=ΔH/(ΔHm100%)*100%, where ΔHm100% was the standard melting enthalpy (crystalline melting heat) of polyvinylidene fluoride, and ΔHm100%=104.7 J/g.

### 5) Colloidal solution viscosity test

14 g of fluoropolymer and 686 g of N-methylpyrrolidone (NMP) were respectively weighed by using a 500 mL beaker, to prepare a colloidal solution with a mass fraction of 2%, the colloidal solution was stirred and dispersed by using a Lichen high-speed grinder at a rotational speed of 800 r/min, and after being stirred for 120 min, the colloidal solution was ultrasonically vibrated for 30 min to remove bubbles. The NDJ-5S rotational viscometer from Lichen Technology was used, a No. 3 rotor was selected and inserted into the colloidal solution, and the colloidal solution was over a scale line. The viscosity was tested at 12 r/min, and viscosity data was read after 6 minutes.

### 2. Bonding strength test

With reference to GB-T2790-1995 national standard "180° Peeling Strength Test Method for Adhesive", bonding force test processes in examples and comparative examples of this application were as follows: A sample with a width of 30 mm and a length of 100 to 160 mm was cut with a blade, and a special double-sided tape was adhered onto a steel plate, where a width of the tape was 20 mm, and a length thereof ranged from 90 to 150 mm. The positive electrode film layer of the electrode plate sample previously cut was adhered onto the double-sided tape, and then rolled three times in a same direction with a roller of 2 kg. A paper tape with a width equal to that of the electrode plate and a length of 250 mm was fixed to an electrode plate current collector, and fixed with a crepe tape. A power supply of a Sansi tensile tester (with a sensitivity of 1 N) was turned on, an indicator light was on, a limit block was adjusted to an appropriate position, and an end of the steel plate not adhered onto the electrode plate was fixed with a lower clamp). The paper tape was folded upward, and fixed with an upper clamp, and a position of the upper clamp was adjusted by using an "Up" button and a "Down" button on a manual controller shipped together with the tensile tester. Then, a test was performed, and a value was read. A force when the electrode plate was under force balance divided by the width of the adhesive tape was taken as a bonding force of the electrode plate per unit length, to represent bonding strength between the positive electrode film layer and the current collector.

### 3. Test of an ultimate compacted density of an electrode plate

The double-side-coated electrode plate was cold pressed by a roller press to test an elongation of the electrode plate after the cold pressing while evaluating the flexibility of the electrode plate after the cold pressing.

By increasing the pressure of the roller press, electrode plates with different compacted densities were obtained. As the pressure increased, the compacted density of the electrode plate increased, the elongation of the electrode plate increased, and the flexibility of the electrode plate decreased. If the elongation of the electrode plate was too high, it was prone to warping of the electrode plate, and if the flexibility of the electrode plate was too low, it was prone to brittle fracturing of the electrode plate. Therefore, it was defined that a maximum compacted density corresponding to an electrode plate when an elongation of the electrode plate was not less than 7‰ and a quantity of times of flexible folding of the electrode plate was not less than 2 was the ultimate compacted density.

The compacted density was calculated by dividing a mass of a single-sided positive electrode film layer by a volume of the positive electrode film layer.

A test method for the elongation was as follows:

The electrode plate was laid flat on a horizontal table and cut into sections. A length of each electrode plate was about 100 cm. A substrate copper foil at an edge of the electrode plate was removed, where a cutting edge of the electrode plate should be kept parallel to an MD direction (perpendicular to a direction of a cold press roller) of the electrode plate, to ensure that the electrode plate part was completely covered by coatings. A steel ruler was used to measure a length between marked points at positions with a same width along a length direction at a head and a tail of the electrode plate, and the length was estimated to 0.1 mm, and recorded before the cold pressing; after the cold pressing, the cold press recorded the length between the corresponding marked points after the cold pressing, and took (length after the cold pressing-length before the cold pressing)/length before the cold pressing as the elongation of the electrode plate.

For a test method for a quantity of times of flexible folding, reference is made to the following.

4. Test on a quantity of times of flexible folding of an electrode plate at a compacted density of 3.6 g/cm³

The positive electrode plate with a compacted density of 3.6 g/cm³ was cut into test samples with a size of 20×100 mm². After being folded in half forward, the positive electrode plate was flattened with a roller of 2 kg and was unfolded and checked against light to determine whether a gap was light-permeable. If the gap was not light-permeable, the positive electrode plate was folded in half backward, was flattened with the roller of 2 kg, and was checked against light again, which was repeated until the gap was light-permeable, and a quantity of times of folding in half was recorded. The test was repeated ten times, and an average value was as reference data of the flexibility of the electrode plate.

### 5. Battery performance test

### 1) Direct current resistance test

At 25°C, a secondary battery was charged to 4.25 V at a constant current rate of 1/3 C, then charged to a current of 0.05 C at a constant voltage of 4.25°C, and allowed to stand for 5 min. Then, the secondary battery was discharged at a rate of 1/3 C for 90 min. An electrode assembly was adjusted to 50% SOC and allowed to stand for 60 min, and then, was discharged at a rate of 4 C for 30S, and a 50% SOC discharge DCR was obtained according to test data. The 50% SOC discharge DCR of a second cycle was used as a test result of an example.

### 2) Test on a capacity retention rate of a battery

A process for testing a capacity retention rate of a battery was as follows: At 25°C, a button battery was charged at a constant current of 1/3 C to 3.65 V, then charged at a constant voltage of 3.65 V to a current of 0.05 C, allowed to stand for 5 min, and then discharged at 1/3 C to 2.5 V, and the obtained capacity was recorded as an initial capacity C0. The foregoing steps were repeated for the same battery, and the discharge capacity Cn of the battery after the n^{th} cycle was recorded. The capacity retention rate of the battery after each cycle was Pn=Cn/C0*100%. The capacity retention rate of the battery was obtained by taking 100 point values, P1, P2, ... P100, as vertical ordinates and a corresponding number of cycles as a horizontal ordinate.

During the test, the first cycle corresponded to n=1, the second cycle corresponded to n=2, ... and the 100^{th} cycle corresponded to n=100. The data of the capacity retention rate of the battery corresponding to Examples 1 to 17 or Comparative examples 1 to 6 in Table 1 was data measured after 500 cycles under the foregoing test conditions, that is, a value of P500.

3) Test on a volumetric energy density of a battery at an ultimate compacted density

A battery at an ultimate compacted density was allowed to stand at 25°C for 2 h, to ensure that the temperature of the battery was 25°C. After the battery was at 0.33 C at 25°C to a charging cut-off voltage, the battery was continuously charged at a constant voltage of the charging cut-off voltage until a current reached 0.05 C, and at this time, the charging ended (where C0 represented a rated capacity of the battery). The battery was allowed stand at 25°C for 1 h. The battery was discharged at 0.33 C at 25°C to a discharging cut-off voltage, and a total discharge capacity E0 of the battery was recorded.

A volume of the battery was measured as V0.

The volumetric energy density of the battery=discharging energy E0 of the battery/volume V0 of the battery.

### III. Analysis of test results of examples and comparative examples

In accordance with the above methods, the batteries of the examples and comparative examples were prepared, and tested for various performance parameters. The results are shown in Table 1, Table 2, and Table 3 as below.

**Table 1**

| No. | Fluorine-containing copolymer | Comonomer | | | Fluoropolymer | | | | |
|---|---|---|---|---|---|---|---|---|---|
| | | Monomer of formula I | Addition method of a monome r of formula I | Molar content of a monome r of formula I | Weight average molecular weight/Te n thousand | Polydispersit y coefficient | Dv50/µ m | | Viscosity of a 2% colloidal solution/mPa• s |
| Example 1 | Vinylidene fluoride-β-acryloxypropioni c acid copolymer | β-acryloyloxypropioni c acid | Added a plurality of times | 1% | 500 | 1.9 | 40 | 48% | 1200 |
| Example 2 | Vinylidene fluoride-β-acryloxypropioni c acid copolymer | β-acryloyloxypropioni c acid | Added a plurality of times | 1% | 600 | 2.0 | 55 | 49% | 2500 |
| Example 3 | Vinylidene fluoride-β-acryloxypropioni c acid copolymer | β-acryloyloxypropioni c acid | Added a plurality of times | 1% | 700 | 2.1 | 68 | *50%* | 3500 |
| Example 4 | Vinylidene fluoride-β-acryloxypropioni c acid copolymer | β-acryloyloxypropioni c acid | Added a plurality of times | 1% | 800 | 2.2 | 80 | 52% | 4500 |
| Example 5 | Vinylidene fluoride-β-acryloxypropioni c acid copolymer | β-acryloyloxypropioni c acid | Added a plurality of times | 1% | 900 | 2.3 | 90 | 54% | 6000 |
| Example 6 | Vinylidene fluoride-β-acryloxypropioni c acid copolymer | β-acryloyloxypropioni c acid | Added a plurality of times | 0.5% | 600 | 2.0 | 55 | 55% | 3000 |
| Example 7 | Vinylidene fluoride-β-acryloxypropioni c acid copolymer | β-acryloyloxypropioni c acid | Added a plurality of times | 0.7% | 600 | 2.0 | 55 | 51% | 2700 |
| Example 8 | Vinylidene fluoride-β-acryloxypropioni c acid copolymer | β-acryloyloxypropioni c acid | Added a plurality of times | 2.0% | 600 | 2.0 | 55 | 46% | 2100 |
| Example 9 | Vinylidene fluoride-β-acryloxypropioni c acid copolymer | β-acryloyloxypropioni c acid | Added a plurality of times | 2.5% | 600 | 2.0 | 55 | 43% | 1600 |
| Example 10 | Vinylidene fluoride-β-acryloxypropioni c acid copolymer | β-acryloyloxypropioni c acid | Added a plurality of times | 1% | 600 | 2.0 | 55 | 49% | 2500 |
| Example 11 | Vinylidene fluoride-β-acryloxypropioni c acid copolymer | β-acryloyloxypropioni c acid | Added a plurality of times | 1% | 600 | 2.0 | 55 | 49% | 2500 |
| Example 12 | Vinylidene fluoride-β-acryloxypropioni c acid copolymer | β-acryloyloxypropioni c acid | Added a plurality of times | 1% | 600 | 2.0 | 55 | 49% | 2500 |
| Example 13 | Vinylidene fluoride-β-acryloxypropioni c acid copolymer | β-acryloyloxypropioni c acid | Added a plurality of times | 1% | 600 | 2.0 | 55 | 49% | 2500 |
| Example 14 | Vinylidene fluoride-acrylic acid copolymer | Acrylic acid | Added a plurality of times | 1% | 600 | 2.0 | 50 | 52% | 2800 |
| Example 15 | Vinylidene fluoride-methacrylic acid copolymer | Methacrylic acid | Added a plurality of times | 1% | 600 | 2.0 | 58 | 51% | 2650 |
| Example 16 | Vinylidene fluoride-maleic acid copolymer | Maleic acid | Added a plurality of times | 1% | 600 | 2.0 | 63 | 51% | 2650 |
| Example 17 | Vinylidene fluoride-β-acryloxypropioni c acid copolymer | β-acryloyloxypropioni c acid | Added at a time | 1% | 600 | 3.3 | 70 | 48% | 2800 |
| Comparativ e example 1 | Vinylidene fluoride-acrylic acid copolymer | Acrylic acid | / | 1% | 110 | 2.2 | 106 | 54% | 80 |

**Table 2**

| No. | Electrode plate | | | | Battery performance | | |
|---|---|---|---|---|---|---|---|
| | Mass fraction of a fluorine-containing copolymer | Quantity of times of folding at a compacted density of 3.6 g/cm³ | Ultimate compacted density (g/cm³) | Bonding strength (N/m) | Volumetric energy density at an ultimate compacted density (Wh/L) | DCR/mQ | Capacity retention rate after 500 cycles |
| Example 1 | 0.6% | 4.0 | 3.7 | 13.2 | 690.4 | 80 | 87.3% |
| Example 2 | 0.6% | 3.3 | 3.7 | 17.0 | 690.4 | 85 | 87.6% |
| Example 3 | 0.6% | 3.0 | 3.7 | 20.7 | 690.4 | 90 | 87.2% |
| Example 4 | 0.6% | 2.7 | 3.7 | 23.1 | 690.4 | 100 | 86.9% |
| Example 5 | 0.6% | 2.3 | 3.6 | 28.3 | 671.7 | 110 | 86% |
| Example 6 | 0.6% | 2.7 | 3.65 | 10.7 | 681.1 | 100 | 86.7% |
| Example 7 | 0.6% | 3.0 | 3.7 | 11.6 | 690.4 | 95 | 87.1% |
| Example 8 | 0.6% | 3.0 | 3.7 | 26.5 | 690.4 | 95 | 87% |
| Example 9 | 0.6% | 3.3 | 3.7 | 29.9 | 690.4 | 100 | 86.4% |
| Example 10 | 0.3% | 4.0 | 3.7 | 10.4 | 692.5 | 113 | 85% |
| Example 11 | 0.4% | 4.0 | 3.7 | 11.1 | 691.8 | 108 | 85.3% |
| Example 12 | 0.8% | 3.0 | 3.7 | 21.6 | 689.0 | 97 | 86.8% |
| Example 13 | 1.1% | 2.0 | 3.6 | 26.4 | 668.3 | 113 | 85.8% |
| Example 14 | 0.6% | 2.3 | 3.6 | 17.0 | 671.7 | 93 | 87.5% |
| Example 15 | 0.6% | 3.0 | 3.7 | 15.2 | 690.4 | 99 | 87.2% |
| Example 16 | 0.6% | 2.7 | 3.65 | 17.0 | 681.1 | 108 | 86.5% |
| Example 17 | 0.6% | 2.7 | 3.65 | 12.4 | 681.1 | 123 | 84.5% |
| Comparative example 1 | 2.0% | 1.0 | 3.55 | 11.0 | 653.0 | 127 | 84% |

**Table 3**

| No. | Fluorine-containing copolymer | Fluoropolymer | | | | | Electrode plate | | | Battery performance | |
|---|---|---|---|---|---|---|---|---|---|---|---|
| | | Weight average molecular weight/Ten thousand | Polydispersity coefficient | Dv50/µm | | Viscosity of a 2% colloidal solution/mPa•s | Mass fraction of a fluorine-containing copolymer | Quantity of times of folding at a compacted density of 3.6 g/cm³ | Ultimate compacted density g/cm³ | Volumetric energy density at an ultimate compacted density (Wh/L) | Capacity retention rate after 500 cycles |
| Example 2 | Vinylidene fluoride-β-acryloxypropionic acid copolymer | 600 | 2.0 | 55 | 49% | 2500 | 0.6% | 3.3 | 3.7 | 690.4 | 87.6% |
| Example 6 | Vinylidene fluoride-β-acryloxypropionic acid copolymer | 600 | 2.0 | 55 | 55% | 3000 | 0.6% | 2.7 | 3.65 | 681.1 | 86.7% |
| Example 7 | Vinylidene fluoride-β-acryloxypropionic acid copolymer | 600 | 2.0 | 55 | 51% | 2700 | 0.6% | 3.0 | 3.7 | 690.4 | 87.1% |
| Example 8 | Vinylidene fluoride-β-acryloxypropionic acid copolymer | 600 | 2.0 | 55 | 46% | 2100 | 0.6% | 3.0 | 3.7 | 690.4 | 87.0% |
| Example 9 | Vinylidene fluoride-β-acryloxypropionic acid copolymer | 600 | 2.0 | 55 | 43% | 1600 | 0.6% | 3.3 | 3.7 | 690.4 | 86.4% |
| Example 14 | Vinylidene fluoride-acrylic acid copolymer | 600 | 2.0 | 50 | 52% | 2800 | 0.6% | 2.3 | 3.6 | 671.7 | 87.5% |
| Example 15 | Vinylidene fluoride-methacrylic acid copolymer | 600 | 2.0 | 58 | 51% | 2650 | 0.6% | 3.0 | 3.7 | 690.4 | 87.2% |
| Example 16 | Vinylidene fluoride-maleic acid copolymer | 600 | 2.0 | 63 | 51% | 2650 | 0.6% | 2.7 | 3.65 | 681.1 | 86.5% |
| Example 17 | Vinylidene fluoride-β-acryloxypropionic acid copolymer | 600 | 3.3 | 70 | 48% | 2800 | 0.6% | 2.7 | 3.65 | 681.1 | 84.5% |
| Comparative example 2 | Polyvinylidene fluoride | 600 | 1.9 | 40 | 57% | 2400 | 0.6% | 2.0 | 3.6 | 671.73 | 84.3% |

According the foregoing results, it can be learned that the fluoropolymer in Examples 1 to 17 includes a structural unit derived from vinylidene fluoride and a structural unit derived from acrylic acid, methacrylic acid, β-acryloxypropionic acid, or maleic acid, where a weight average molecular weight of the fluoropolymer ranges from 5 million to 9 million.

Upon comparison between Examples 1 to 17 and Comparative example 1, it can be learned that compared with the general binders in the related art, the vinylidene fluoride-β-acryloxypropionic acid copolymer, vinylidene fluoride-acrylic acid copolymer, vinylidene fluoride-methacrylic acid copolymer, and vinylidene fluoride-maleic acid copolymer binders with a weight average molecular weight of 5 million to 9 million can, at a low addition amount, improve flexibility and an ultimate compacted density of an electrode plate, and lower battery resistance, thereby comprehensively improving an ultimate volumetric energy density and a cycle capacity retention rate of a battery.

It can be known from Table 3 that, compared with a vinylidene fluoride homopolymer with a same weight average molecular weight and a same addition amount, the fluoropolymer provided by the present disclosure can also improve the flexibility and ultimate compacted density of the electrode plate, thereby comprehensively improving the ultimate volumetric energy density and the cycle capacity retention rate of the battery.

It can be learned from Examples 1 to 5 that, the foregoing fluoropolymer with a weight average molecular weight of 5 million to 8 million can lower battery resistance more effectively while taking both the ultimate volumetric energy density and the cycle capacity retention rate of the battery into account.

It can be learned from Examples 1 to 17 that the molar content of the structural unit derived from the unsaturated carboxylic acid monomer ranges from 0.5% to 2.5% based on the total molar number of the structural units in the fluoropolymer. Based on the total molar number of the structural units in the fluoropolymer, the vinylidene fluoride-β-acryloxypropionic acid copolymer, vinylidene fluoride-acrylic acid copolymer, vinylidene fluoride-methacrylic acid copolymer, and vinylidene fluoride-maleic acid copolymer binders can, at a low addition amount, improve flexibility and an ultimate compacted density of an electrode plate, and lower battery resistance, thereby comprehensively improving an ultimate volumetric energy density and a cycle capacity retention rate of a battery.

It can be learned from Examples 2 and 6 to 9 that, based on a total molar number of the structural units in the fluoropolymer, the fluoropolymer with a molar content of the structural unit derived from the unsaturated carboxylic acid monomer ranging from 0.7% to 2.0% can further lower battery resistance while taking the both the ultimate volumetric energy density and the cycle capacity retention rate of the battery into account more effectively.

It can be learned from Examples 1 to 17 that the vinylidene fluoride-β-acryloxypropionic acid copolymer, vinylidene fluoride-acrylic acid copolymer, vinylidene fluoride-methacrylic acid copolymer, and vinylidene fluoride-maleic acid copolymer binders with a polydispersity coefficient of 1.8 to 3.5 can, at a low addition amount, improve flexibility and an ultimate compacted density of an electrode plate, and lower battery resistance, thereby comprehensively improving an ultimate volumetric energy density and a cycle capacity retention rate of a battery.

It can be learned from examples that the fluoropolymer having a polydispersity coefficient of 1.9 to 2.3 can further improve bonding strength, lower battery resistance, and improve cycle stability of a battery.

It can be learned from Examples 2 and 14 to 16 that, the fluoropolymer containing β-acryloxypropionic acid in the monomer of formula I can more effectively lower battery resistance and improve flexibility of an electrode plate while further improving an ultimate volumetric energy density and cyclic stability of a battery.

It can be learned from Examples 1 to 17 that when the vinylidene fluoride-β-acryloxypropionic acid copolymer, vinylidene fluoride-acrylic acid copolymer, vinylidene fluoride-methacrylic acid copolymer, and vinylidene fluoride-maleic acid copolymer binders with a mass fraction of 0.3% to 1.1% based on a total mass of the positive electrode film layer, the fluoropolymer can improve flexibility and an ultimate compacted density of an electrode plate, and lower battery resistance, thereby comprehensively improving an ultimate volumetric energy density and a cycle capacity retention rate of a battery.

It can be learned from Examples 2 and 10 to 13 that when the mass fraction of the fluoropolymer ranges from 0.4% to 0.8% based on the total mass of the positive electrode film layer, the battery resistance can be further lowered, and the ultimate volumetric energy density and cyclic stability of the battery can be improved.

It should be noted that this application is not limited to the foregoing embodiments. The foregoing embodiments are exemplary only, and any embodiment within the scope of the technical solution of this application that has substantially the same composition and has the same effects as the technical idea is encompassed in the technical scope of this application. In addition, without departing from the gist of this application, various modifications that may be conceived by a person skilled in the art to the embodiments, and other modes constructed by combining some of the constituent elements of the embodiments are also included in the scope of this application.

## Claims

1. A fluoropolymer, comprising a structural unit derived from vinylidene fluoride and a structural unit derived from an unsaturated carboxylic acid monomer, wherein a weight average molecular weight of the fluoropolymer ranges from 5 million to 9 million, and optionally, from 5 million to 8 million.

2. The fluoropolymer according to claim 1, wherein based on a total molar number of the structural units in the fluoropolymer, a molar content of the structural unit derived from the unsaturated carboxylic acid monomer ranges from 0.5% to 2.5% and optionally, from 0.7% to 2.0%.

3. The fluoropolymer according to claim 1 or 2, wherein a polydispersity coefficient of the fluoropolymer ranges from 1.5 to 3.5, and optionally, from 1.9 to 2.3.

4. The fluoropolymer according to any one of claims 1 to 3, wherein a crystallinity of the fluoropolymer ranges from 40% to 55%, and optionally, from 48% to 55%.

5. The fluoropolymer according to any one of claims 1 to 4, wherein a Dv50 particle size of the fluoropolymer ranges from 20 um to 100 um.

6. The fluoropolymer according to any one of claims 1 to 5, wherein the unsaturated carboxylic acid monomer is shown in formula I: 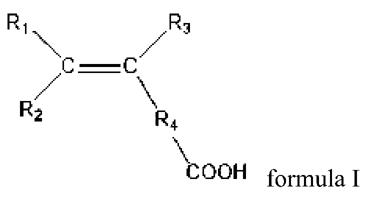 R₁, R₂, and R₃ each independently comprise at least one of hydrogen and C₁₋₃ alkyl, and R₄ comprises at least one of an ester group, a carbonyl group, C₁₋₃ alkyl, and a single bond.

7. The fluoropolymer according to any one of claims 1 to 6, wherein R₄ comprises an ester group.

8. The fluoropolymer according to any one of claims 1 to 7, wherein the unsaturated carboxylic acid monomer comprises at least one of acrylic acid, methacrylic acid, β-acryloxypropionic acid, and maleic acid.

9. The fluoropolymer according to any one of claims 1 to 8, wherein viscosity of a colloidal solution of the fluoropolymer with a mass content of 2% prepared by dissolving the fluoropolymer in N-methylpyrrolidone ranges from 1000 mPa·s to 6000 mPa·s.

10. The fluoropolymer according to any one of claims 1 to 9, wherein the fluoropolymer comprises at least one of poly(vinylidene fluoride-acrylic acid), poly(vinylidene fluoride-methacrylic acid), poly(vinylidene fluoride-β-acryloxypropionic acid), and poly(vinylidene fluoride-maleic acid).

11. A preparation method for a fluoropolymer, comprising the following steps:
providing a vinylidene fluoride monomer, an unsaturated carboxylic acid monomer, and a solvent, and performing a first-stage polymerization reaction to obtain a first product;
performing a second-stage polymerization reaction on the first product in a water-insoluble gas atmosphere; and
adding a chain transfer agent, and performing a third-stage polymerization reaction, to obtain a fluoropolymer with a weight average molecular weight of 5 million to 9 million.

12. The preparation method according to claim 11, wherein the unsaturated carboxylic acid monomer is shown in formula I: 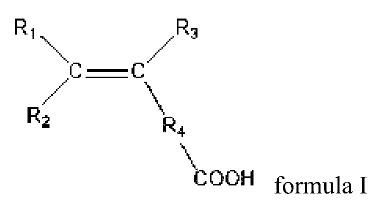 R₁, R₂, and R₃ each independently comprise at least one of hydrogen and C₁₋₃ alkyl, and R₄ comprises at least one of an ester group, a carbonyl group, C₁₋₃ alkyl, and a single bond.

13. The preparation method according to claim 11 or 12, wherein a reaction temperature of the first-stage polymerization reaction ranges from 45°C to 60°C, a reaction time thereof ranges from 2 hours to 8 hours, and a reaction pressure thereof ranges from 4 MPa to 6 MPa.

14. The preparation method according to any one of claims 11 to 13, wherein a reaction temperature of the second-stage polymerization reaction ranges from 60°C to 80°C, a reaction time thereof ranges from 2 hours to 4 hours, and a reaction pressure thereof ranges from 6 MPa to 8 MPa.

15. The preparation method according to any one of claims 11 to 14, wherein a reaction time of the third-stage polymerization reaction ranges from 1 hour to 2 hours.

16. The preparation method according to any one of claims 11 to 15, wherein the chain transfer agent comprises one or more of cyclohexane, isopropanol, methanol, and acetone.

17. The preparation method according to any one of claims 11 to 16, wherein the water-insoluble gas comprises one or more of nitrogen, oxygen, hydrogen, and methane.

18. The preparation method according to any one of claims 11 to 17, wherein a dosage of the chain transfer agent is 1.5% to 4% of a total mass of the vinylidene fluoride monomer and the unsaturated carboxylic acid monomer.

19. The preparation method according to any one of claims 11 to 18, wherein the first-stage polymerization reaction comprises the following steps:
adding a solvent and a dispersant into a container to remove oxygen from a reaction system;
adding an initiator and a pH adjuster into the container, to adjust a pH value to 6.5 to 7, and then adding the vinylidene fluoride monomer, to cause a pressure in the container to reach 4 MPa to 6 MPa; and
after stirring for 30 to 60 minutes, raising the temperature to 45°C to 60°C, and adding the unsaturated carboxylic acid monomer to perform the first-stage polymerization reaction.

20. The preparation method according to claim 19, wherein a dosage of the solvent is 2 to 8 times the total mass of the vinylidene fluoride monomer and the unsaturated carboxylic acid monomer.

21. The preparation method according to claim 19 or 20, wherein the dispersant comprises at least one of cellulose, cellulose ether, and polyvinyl alcohol; and optionally, the cellulose comprises hydroxypropyl methylcellulose, and the cellulose ether comprises one or more of methyl cellulose ether and carboxyethyl cellulose ether.

22. The preparation method according to any one of claims 19 to 21, wherein a dosage of the dispersant is 0.1% to 0.3% of the total mass of the vinylidene fluoride monomer and the unsaturated carboxylic acid monomer.

23. The preparation method according to any one of claims 19 to 22, wherein the initiator comprises at least one of tert-amyl peroxypivalate, tert-amyl peroxypivalate, 2-ethyl peroxydicarbonate, diisopropyl peroxydicarbonate, tert-butyl peroxypivalate, and diisopropyl peroxydicarbonate.

24. The preparation method according to any one of claims 19 to 23, wherein a dosage of the pH adjuster is 0.05% to 0.2% of the total mass of the vinylidene fluoride monomer and the unsaturated carboxylic acid monomer.

25. The preparation method according to any one of claims 19 to 24, wherein in the first-stage polymerization reaction, the unsaturated carboxylic acid monomer is added a plurality of times.

26. A positive electrode plate, comprising a positive electrode film layer, comprising the fluoropolymer according to any one of claims 1 to 10 or a fluoropolymer prepared by the preparation method according to any one of claims 11 to 25.

27. The positive electrode plate according to claim 26, wherein a mass fraction of the fluoropolymer is 0.3% to 1.1%, and optionally 0.4% to 0.8%, based on a total mass of the positive electrode film layer.

28. The positive electrode plate according to claim 26 or 27, wherein a quantity of times that the positive electrode plate is bendable at a compacted density of 3.5 g/cm³ to 3.7 g/cm³ is not less than 2, and optionally, 2 to 4.

29. The positive electrode plate according to any one of claims 26 to 28, wherein an ultimate compacted density of the positive electrode plate is not less than 3.6 g/cm³, and optionally, 3.6 g/cm³ to 3.7 g/cm³.

30. A secondary battery, comprising the positive electrode plate according to any one of claims 26 to 29.

31. An electric device, comprising the secondary battery according to claim 30.
